# EUROPEAN PATENT SPECIFICATION

(11) **EP 1 135 282 B1**
(45) Date of publication and mention of the grant of the patent: **25.06.2003**
(21) Application number: 99956192.1
(22) Date of filing: 24.11.1999
(51) Int. Cl.: B60R 21/32, B60R 21/20

(54) **AIRBAG DOOR INCLUDING A STATE DISPLAY FOR A SWITCHABLE AIRBAG SYSTEM**
AIRBAGABDECKKLAPPE MIT EINER ANGEBRACHTEN SCHALTZUSTANDSLEUCHTE FÜR EIN SPERRBARES AIRBAGSYSTEM
VOLET DE COUSSIN GONFLABLE DE SECURITE COMPORTANT UN AFFICHAGE DE STATUT POUR SYSTEME DE COUSSIN GONFLABLE DE SECURITE COMMUTABLE

(30) Priority: 04.12.1998 GB 9826706
(43) Date of publication of application: 26.09.2001
(73) Proprietor: FORD MOTOR COMPANY LIMITED, Brentwood, Essex CM13 3BW (GB); FORD-WERKE AKTIENGESELLSCHAFT, 50735 Köln (DE); FORD FRANCE S.A., 92506 Rueil-Malmaison Cédex (FR)
(72) Inventor: BUTLER, Bryan, Billericay, EssexCM12 9UN (GB); NOLAN, Stephen, Huntington Woods, MI 48070 (US)
(74) Representative: Messulam, Alec Moses
(86) International application number: GB9903901
(87) International publication number: WO00034085

(56) References cited:
- EP-A- 0 719 680
- US-A- 5 549 323

## Description

The present invention relates to an improved airbag in which the airbag may be disabled in predetermined conditions

It has now been accepted that whilst airbags can effectively reduce injury and death in many accidents, there are occasions when the airbag itself may cause more injury than the accident. Such occasions include the use of a passenger airbag when a rear facing infant seat (RFIS) is present in the passenger seat, or when a small child is not strapped into position in the seat. In such cases it is recognised that there are advantages in having an airbag disabled condition in which the airbag will not operate in case of impact.

Many sensor systems continue to be developed which detect the occupancy state of the passenger seat and then automatically disarm the airbag when the correct conditions for its operation do not apply, i.e the presence of a RFIS, or an adult mispositioned.

Alternative simpler systems such as EP-A-719 680 merely include an airbag disarm switch allowing the driver to select when the airbag will not operate.

In either case, it is important that there is a display which clearly shows the operational state of the airbag. Otherwise it would be possible for the driver to forget that he needs to rearm the airbag when an adult next sits in the passenger seat, or alternatively would have to keep checking that the airbag was disarmed automatically when a RFIS is in use.

According to this invention there is provided an airbag door for an airbag capable of being switched between an enabled state and a disarmed state, in which the airbag door includes an airbag enabled state display switchable from a first display in which the display shows indicia representing the enabled state of the airbag to a second display in which the display shows indicia representing the disarmed state of the airbag.

Thus the airbag door itself carries the display which means that the passenger and driver can readily see the state of the airbag.

The airbag may be changed from its enabled to disabled state automatically by an occupancy sensor or manually by selecting a switch.

Preferably such selective display is provided by using a 'secret - until -lit' material which carries a first printed layer on its obverse surface and a second printed layer on its reverse surface, the second printed layer being visible only when backlit.

Such a 'secret until lit' material is disclosed in International Patent application WO97/16812 and comprises a partially transparent tinted substrate layer carrying a first obverse layer and a second reverse layer, the second reverse layer carrying a first printed display, and the first obverse layer carrying a second printed display and being partially transparent coated with a transparent carrier supporting non opaque particulate light splitting or light frequency modulating materials such as mica coated with titanium dioxide. In ambient light the second printed display is visible and when a light of sufficient intensity is shone from a source located at the rear of the material the presence of the first printed display on the second reverse layer becomes visible and the second printed display becomes visible. A light emitting diode or sets of diodes can be used to provide the backlighting.

The airbag enabled state display may include two separate messages printed on the reverse layer, with a patterned or blank obverse layer. In this case when the airbag is enabled, a first message 'AIRBAG ACTIVATED' is backlit and thus visible to the occupants of the vehicle. When the airbag is disabled, a second message 'AIRBAG DE-ACTIVATED' is backlit and thus visible to the occupants of the vehicle.

Preferably however a first message is printed on the obverse layer and a second message is printed on the reverse layer, so that the first message is visible when the display is not backlit and the second message is visible when the display is backlit. Preferably the first message is 'AIRBAG ACTIVATED' and the second message is 'AIRBAG DE-ACTIVATED' since in most vehicles the default state of the airbag is enabled and it has to be positively disabled when required for particular circumstances.

The material is preferably a flexible material which can be moulded to any profiled airbag door. A suitable material is a polycarbonate flexible sheet.

Because the sheet is lightweight and the display is formed only of the sheet and a series of light emitting diodes, their presence on the door does not present a danger if the airbag deploys.

### Brief Description of the Drawings

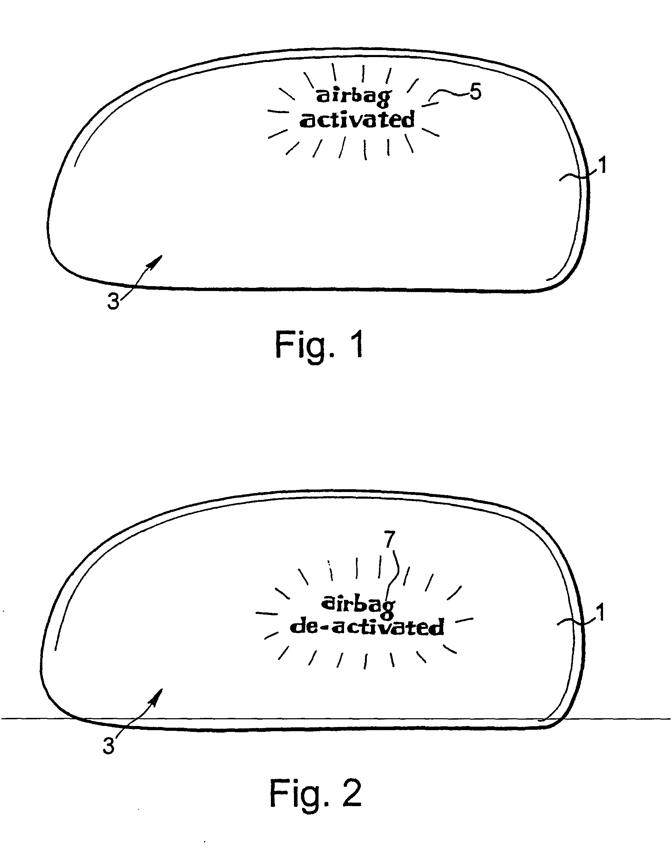

An airbag door in accordance with the invention will be described, with reference to the accompanying drawings, in which:-
Figure 1 illustrates the door when the airbag is enabled; and,
Figure 2 illustrates the door when the airbag is disabled.

### Description of the Preferred Embodiment

An airbag door 1 for an airbag (not illustrated) capable of being switched between an enabled state and a disarmed state, in which the airbag door 1 includes an airbag enabled state display 3 switchable from a first display 5 in which the display shows indicia representing the enabled state of the airbag to a second display 7 in which the display shows indicia representing the disarmed state of the airbag.

The airbag is a standard airbag with a standard airbag door carrying upon its outer surface a display 3 comprising a series of LED's mounted behind a secret until lit material such as that sold by John McGavigan Limited of Woodilee Road, Kirkintilloch, Glasgow G66 3UW and as described in their patent application WO 97/16812

The material is a polycarbonate flexible material which carries upon its reverse surface in a first area, a first message AIRBAG ACTIVATED and in a second area, a second message AIRBAG DE-ACTIVATED. Two sets of light emitting diodes are arranged, one behind each area.

When the airbag is enabled the set of lights behind the first area is illuminated to make the first message visible. The second message is invisible because the lights behind are not illuminated. When the airbag is disabled the set of lights behind the second area is illuminated and the second message becomes visible.

Thus the driver and passenger will always know the enabled state of the airbag, the display 3 being conveniently located on the airbag door 1.

## Claims

1. An airbag door (1) for an airbag capable of being switched between an enabled state and a disarmed state, in which the airbag door (1) includes an airbag enabled state display (3) switchable from a first display (5) in which the display shows indicia representing the enabled state of the airbag to a second display (7) in which the display shows indicia representing the disarmed state of the airbag.

2. An airbag door as claimed in claim 1, in which the display (3) is provided by a secret until lit material which carries one printed layer on its obverse surface and a second printed layer on its reverse surface.

3. An airbag door as claimed in claim 1 or 2, in which the first displays and second displays are each printed on the reverse surface of the display, and the display includes two sets of light emitting diodes, one set provided behind the first displays and the other provided behind the second displays.

## Patentansprüche

1. Luftsackklappe (1) für einen zwischen einem aktivierten und einem entschärften Zustand umschaltbaren Luftsack, worin die Luftsackklappe (1) eine Luftsack-Aktivierungszustandsanzeige (3) beinhaltet, die von einer ersten Anzeige (5), in welcher die Anzeige den aktivierten Zustand des Luftsackes darstellende Hinweise anzeigt, auf eine zweite Anzeige (7), in welcher die Anzeige den entschärften Zustand des Luftsackes darstellende Hinweise anzeigt, umgeschaltet werden kann.

2. Luftsackklappe nach Anspruch 1, worin die Anzeige (3) mit einem "unbeleuchtet unsichtbaren" Material ausgestattet ist, das eine bedruckte Schicht auf seiner vorderseitigen Oberfläche und eine zweite bedruckte Schicht auf seiner rückwärtigen Oberfläche trägt.

3. Luftsackklappe nach Anspruch 1 oder 2, worin die erste und zweite Anzeige beide auf der rückwärtigen Oberfläche der Anzeige aufgedruckt sind, und die Anzeige zwei Reihen von Leuchtdioden aufweist, wobei je eine Reihe hinter der ersten Anzeige und die andere Reihe hinter der zweiten Anzeige angeordnet ist.

## Revendications

1. Volet de coussin gonflable de sécurité (1) destiné à un coussin gonflable de sécurité pouvant être commuté entre un état activé et un état désactivé, dans lequel le volet de coussin gonflable de sécurité (1) comprend un affichage de l'état activé (3) du coussin gonflable de sécurité pouvant être commuté depuis un premier affichage (5) où l'affichage présente une indication représentant l'état activé du coussin gonflable de sécurité vers un second affichage (7) où l'affichage présente une indication représentant l'état désarmé du coussin gonflable de sécurité.

2. Volet de coussin gonflable de sécurité selon la revendication 1, dans lequel l'affichage (3) est réalisé par un matériau invisible sauf s'il est éclairé qui porte une première couche imprimée sur sa surface avant et une seconde couche imprimée sur sa surface arrière.

3. Volet de coussin gonflable de sécurité selon la revendication 1 ou 2, dans lequel le premier affichage et le second affichage sont chacun imprimés sur la surface arrière de l'afficheur, et l'afficheur comprend deux ensembles de diodes électroluminescentes, un premier ensemble étant prévu derrière le premier affichage et l'autre étant prévu derrière le second affichage.
